# EUROPEAN PATENT APPLICATION

(11) **EP 0 939 377 A2**
(43) Date of publication of application: **01.09.1999**
(21) Application number: 99103055.2
(22) Date of filing: 16.02.1999
(51) Int. Cl.: G06F 17/60

(54) **Marketing System**

(30) Priority: 18.02.1998 JP 5277998
(71) Applicant: Hitachi, Ltd., Chiyoda-ku, Tokyo 101-8010 (JP)
(72) Inventor: Hatanaka, Shyoko, Midori 4-chome, Sumida-ku, Tokyo (JP); Yasunobu, Chizuko, Tokyo (JP); Sudo, Mitsuo, Tokyo (JP); Ota, Yasuyuki,, Kawasaki-shi, Kanagawa-ken (JP); Sekiguchi, Kazuyuki, Yokohama-shi, Kanagawa-ken (JP); Kojima, Takeshi, Kawasaki-shi, Kanagawa-ken (JP)
(74) Representative: Strehl Schübel-Hopf & Partner

(57) **Abstract**

The present invention is intended to provide a marketing system capable of organically linking an analysis result to the data of a business rule. An analysis capability of the marketing system according to the invention extracts information necessary for counterplan analysis from a shopping history database, a customer database, and a merchandise database, analyzes the extracted information, and stores an analysis result into an analysis result database. A rule generation capability of the marketing system extracts the analysis result information from the analysis result database, generates a business rule by adding rule parameter definition information of person in charge inputted from an input device to the extracted analysis result information, and stores the generated business rule into a business rule base. A rule execution capability executes the business rule stored in the business rule base by use of the information stored in the shopping history database, the customer database, and the merchandise database to generate counterplan history information and stores the generated counterplan history information into a counterplan history database.

## Description

### BACKGROUND OF THE INVENTION

The present invention generally relates to a corporate marketing method and a corporate marketing system. More particularly, the present invention relates to a system suitable for preparing business rules defining a method of providing merchandise and information suitable for individual customers in the merchandise and information provision in database marketing.

Recently, in order to satisfy diversified customer needs, corporations are required to perform so-called one-to-one marketing in which customized merchandise and information are provided to individual customers rather than mass marketing in which merchandise and information are provided unilaterally.

Provision of individually customized merchandise and information to a huge number of customers requires to describe a customizing method in business rules for rational customization.

Systems for analyzing merchandise and information satisfying customer needs are conventionally available. In addition, a customization system for executing merchandise and information provision based on a business rule defined by offerers in consideration of their sixth sense and experience is being proposed to realize rational customization.

The analyzing system (or a data mining system) was described in the NIKKEI Information Strategy, December 1996, Special Report 2 "Data Mining for Distinctly Gripping A Customer", for example.

The marketing system was described in the NIKKEI Information Strategy, August 1996, Special Report "Surviving In Competition of Internet Online Selling with One-to-One Marketing", for example.

Merchandise and information customization is executed by use of these systems in generally the following procedure.
(1) By use of the analyzing system, the relational rule information between a statistically analysis result and data is created.
(2) By use of the analysis result obtained in (1) as general backing information, a particular customization (hereafter referred to as counterplan) method based on intuition and experience is determined to be described in a business rule.
(3) The created business rule is inputted in the customization system and execute the counterplan.

However, the business rule is created by considering the sixth sense and experience of an offerer based on the output result of the analyzing system, above-mentioned conventional technology involves the following problems.
(1) There is no interaction between the analysis result and the business rule.
(2) Business rule preparation requires the six sense and experience of an offerer.
(3) Intervention of offerer is required.
(4) Deviation between the generated business rule and customer needs exists.
   (a) A same customer falls under a plurality of counterplans while there are customers who fall under no counterplan.
   (b) A gap between the generated business rule and customer's desire exists.
(5) The business rule is prepared on a single-shot basis, so that the prepared rules exhibit variations, making the evaluation of results difficult.

### SUMMARY OF THE INVENTION

It is therefore an object of the present invention to provide organic linking between analysis result and business rule data.

The following outlines the representative aspects of the invention to be disclosed herein.

In carrying out the invention and according to one aspect thereof, there is provided a marketing system having an input device, a processor, and a storage device. The storage device contains a history database (DB), a customer database (DB), a merchandise database (DB), an analysis result database (DB), and a business database (DB).

The processor comprises: an analysis means for analyzing history information in the history database, customer information in the customer database, and merchandise information in the merchandise database based on analysis designation information inputted from the input device and storing analysis result information into the analysis result database; and a rule generation means for selecting the analysis result information from the analysis result database based on selection designation information inputted from the input device, generating a business rule from the selected analysis result information and rule definition parameter information inputted from the input device, and storing the generated business rule into the business database.

In carrying out the invention and according to another aspect thereof, there is provided a marketing system having an input device, a processor, and a storage device. The storage device contains a history database, a customer database, a merchandise database, an analysis database, a business database, and a counterplan history database.

The processor has a rule execution means for generating offering information to be provided by checking a customer number inputted from the input device with a business rule held in the business database, executing a counterplan based on the checked business rule, generating counterplan history information based on the information about the reaction to the offering information obtained for the counterplan executed by providing the offering information to a customer and the offering information, and storing the counterplan history information into the counterplan history information database.

In carrying out the invention and according to still another aspect thereof, there is provided a marketing system having an input device, an output device, a processor, and a storage device. The storage device stores a history database, a customer database, a merchandise database, an analysis result database, a business database, and an analysis result generation know-how database.

The processor has an analysis processing means for selecting analysis result generation know-how from the analysis result generation know-how database according to an analysis result generation know-how select instruction inputted from the input device, executing analysis on the history information in the history database, the customer information in the customer database, and the merchandise information in the merchandise database based on the selected analysis result generation know-how, and storing analysis result into the analysis result database.

In carrying out the invention and according to yet another aspect thereof, there is provided a marketing system having an input device, a processor, and a storage device. The storage device contains a history database, a customer database, a merchandise database, an analysis result database, a business database, and a business rule generation know-how database.

The processor has a rule generation processing means for selecting analysis result information from the analysis result database based on selection designation information inputted from the input device, selecting business rule generation know-how from the business rule generation know-how database according to a business rule generation know-how select instruction inputted from the input device, generating a business rule based on the selected analysis result information and the selected business rule generation know-how, and storing the generated business rule into the business database.

In carrying out the invention and according to a different aspect thereof, there is provided a marketing system according to the invention has an input device, an output device, a processor, and a storage device. The storage device contains a history database, a customer database, a merchandise database, an analysis result database, a business database, and a counterplan history database.

The processor has a processing means for referencing, when two-dimensional display designating information formed by a combination of a customer attribute and a counterplan number is inputted from the input device, the information in the history database, the customer database, the merchandise database, and the counterplan history database, generating two-dimensional display information arranged with customer attributes corresponding to each counterplan number with the vertical axis (or the horizontal axis) representing the customer attribute item and the horizontal axis (or the vertical axis) representing the counterplan number, and displaying the generated two-dimensional display information onto the output device.

In carrying out the invention and according to a still different aspect thereof, there is provided a marketing system according to the invention has an input device, an output device, a processor, and a storage device. The storage device contains a history database, a customer database, a merchandise database, an analysis result database, a business database, and a counterplan history database.

The processor has a processing means for referencing, when two-dimensional display designating information formed by a combination of a customer number and a counterplan number is inputted from the input device, the information in the history database, the customer database, the merchandise database, and the counterplan history database, generating two-dimensional display information arranged with the number of the customer corresponding to each counterplan numbers with the vertical axis (or the horizontal axis) representing the customer number and the horizontal axis (or the vertical axis) representing the counterplan number, and displaying the generated two-dimensional display information onto the output device.

In carrying out the invention and according to a still different aspect thereof, there is provided a marketing system according to the invention has an input device, an output device, a processor, and a storage device. The storage device contains a history database, a customer database, a merchandise database, an analysis result database, a business database, and a counterplan history database.

The processor has a processing means for referencing, when two-dimensional display designating information formed by a combination of a merchandise ID and a counterplan number is inputted from the input device, the information in the history database, the customer database, the merchandise database, and the counterplan history database, generating two-dimensional display information arranged with the number of the merchandise corresponding to counterplan numbers with the vertical axis (or the horizontal axis) representing the merchandise ID and the horizontal axis (or the vertical axis) representing the counterplan number, and displaying the generated two-dimensional display information onto the output device.

### BRIEF DESCRIPTION OF THE DRAWINGS

These and other objects of the invention will be seen with reference to the description, taken in connection with the accompanying drawing, in which:
FIG. 1 is a schematic block diagram illustrating a marketing system practiced as a first preferred embodiment;
FIG. 2 is a diagram illustrating a flow of analysis processing for realizing an analysis capability;
FIG. 3 is a diagram illustrating a flow of rule generation processing for realizing a rule generation capability;
FIG. 4 is a diagram illustrating a flow of rule execution processing for realizing a rule execution capability;
FIG. 5 shows a history information file format;
FIG. 6 shows a customer information file format;
FIG. 7 shows a merchandise information file format;
FIG. 8 shows an analysis result information file format;
FIG. 9 shows a business rule information file format;
FIG. 10 shows a counterplan history information file format;
FIG. 11 is a flowchart illustrating analysis processing;
FIG. 12 shows a file format of multi-dimensional information for analysis and analysis procedure example;
FIG. 13 is a flowchart illustrating rule generation processing;
FIG. 14 shows a rule definition menu information file format;
FIG. 15 is a rule definition output screen layout;
FIG. 16 is a flowchart illustrating rule execution processing;
FIG. 17 shows a provided information file format;
FIG. 18 is a schematic block diagram illustrating a marketing system practiced as a second preferred embodiment of the invention;
FIG. 19 is a diagram illustrating a flow of analysis processing of the second preferred embodiment;
FIG. 20 shows an analysis result generation know-how information file format;
FIG. 21 is a flowchart illustrating analysis processing of the second preferred embodiment;
FIG. 22 is a schematic block diagram illustrating a marketing system practiced as a third preferred embodiment;
FIG. 23 is a diagram illustrating a flow of rule generation processing of the third preferred embodiment;
FIG. 24 shows a rule parameter information file format;
FIG. 25 is a diagram illustrating a flow of rule generation processing of the third preferred embodiment;
FIG. 26 is a diagram illustrating analysis processing of a marketing system practiced as a fourth preferred embodiment; and
FIG. 27 shows a file format of multi-dimensional information for analysis and an analysis example of the fourth preferred embodiment.

### DETAILED DESCRIPTION OF THE PREFERRED EMBODIMENTS

Preferred embodiments of the present invention will be described in detail with reference to the accompanying drawings.

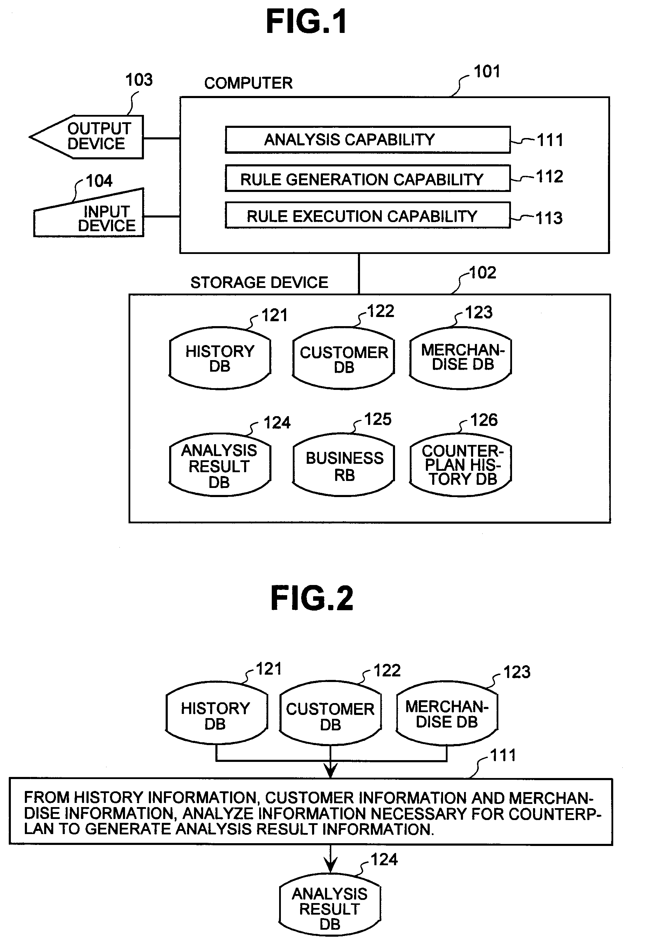

Now, referring to FIG. 1, there is shown a device constitution of a marketing system including its functional constitution for realizing a first preferred embodiment of the invention.

In device constitution, a computer 101 is connected to a storage device 102, an output device 103, and an input device 104.

The computer 101 has an analysis capability 111 for analyzing detailed information (including shopping history information, customer information, and merchandise information) stored in a database owned by a corporation, a rule generation capability 112 for generating a business rule for defining the contents of a counterplan (provision of merchandise and information customized according to individual specifications), and a rule execution capability 113 for executing marketing activities based on the generated business rule.

The storage device 102 stores a history database (also referred to as DB) for holding shopping history information, a customer database 122 for holding customer information, a merchandise database 123 for holding merchandise information, an analysis result database 124 for holding analysis result information obtained by analyzing detailed information, a business rule base (also referred to as business RB) for holding business rules describing the contents of a counterplan, and a counterplan history database 126 for holding execution history information of a counterplan executed based on a business rule of the detailed information owned by a corporation.

The output device 103 displays information for detailed information analysis, business rule generation, and business rule execution.

The input device 104 inputs information for detailed information analysis, business rule generation, and business rule execution.

Preferably, the marketing system practiced as the first preferred embodiment has a computer powerful enough for analyzing huge amounts of detailed information such as history information, customer information, and merchandise information and a mass storage device for storing these pieces of information. For such a system, an NT server may be used.

The marketing system shown in FIG. 1 may be implemented by a constitution in which clients, a server, and a database system are interconnected. To be more specific, the computer shown in FIG. 1 is constituted by a server, the output device 103 and the input device 104 by clients, and the storage device 102 by a database system. In addition, the analysis capability 111, the rule generation capability 112, and the rule execution capability 113 are executed by server programs.

The following describes analysis processing that implements the analysis capability 111 shown in FIG. 2.

The analysis processing reads shopping history information held in the history database 121 stored in the storage device 102, customer information in the customer database 122, and merchandise information in the merchandise database 123. Based on these pieces of information, the analysis processing analyzes information necessary for a counterplan as instructed by a person in charge, generates analysis result information and stores it into the analysis result database 123 in the storage device 102.

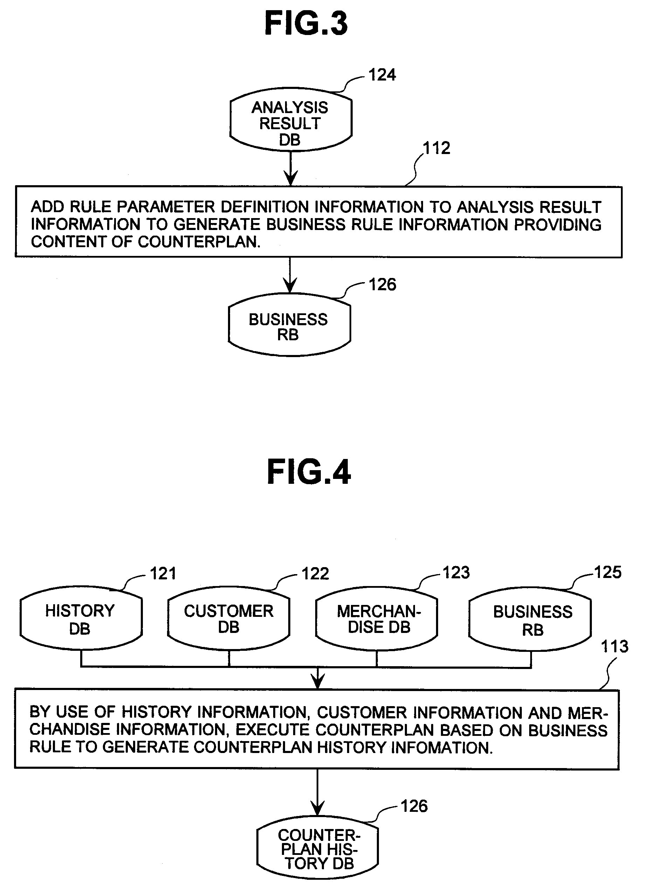

The following describes rule generation processing that implements the rule generation capability 112 shown in FIG. 3.

The rule generation processing generates business rule information providing the contents of a counterplan by adding the rule parameter information inputted from the input device 104 by the person in charge to the analysis result information held in the analysis result database 124 in the storage device 102 and stores the generated business rule information into the business rule base 125 in the storage device 102.

The following describes rule execution processing that implements the rule execution capability 113 shown in FIG. 4.

The rule execution processing executes the counterplan based on the business rule held in the business rule base 125 by use of the shopping history information held in the history database 121, the customer information held in the customer database 122, and the merchandise information held in the merchandise database 123 respectively in the storage device 102, generates counterplan history information, and stores the generated counterplan history information into the counterplan history database 126 in the storage device 102.

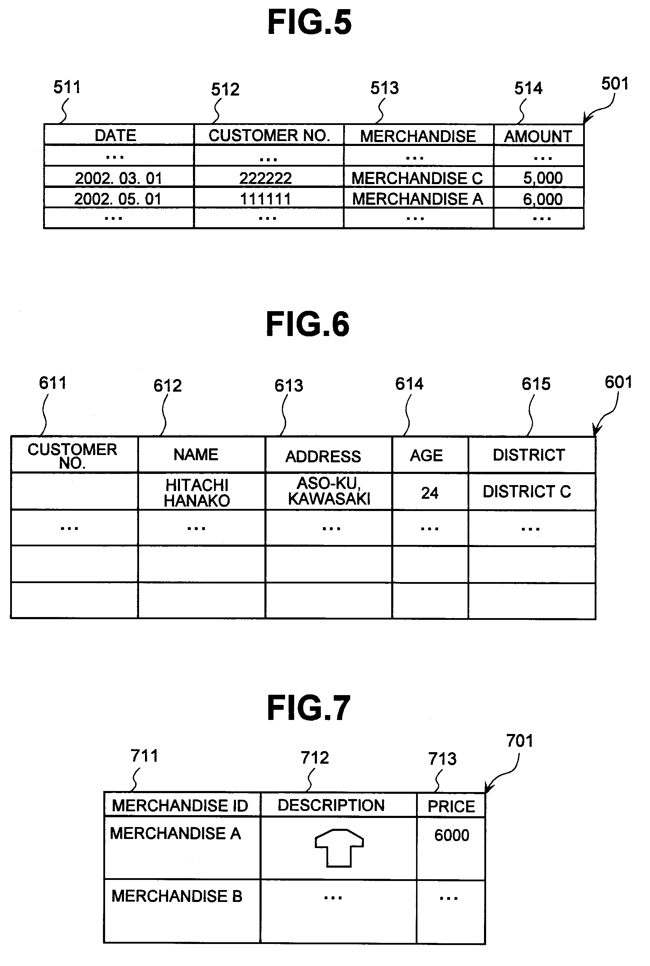

The following describes a history information file 501 shown in FIG. 5.

The history information file 501 is composed of a date 511 indicative of a date on which a shopping transaction occurred, a customer number 512 indicative of a code identifying a purchasing customer, a merchandise 513 indicative of an object shopped, and an amount 514 indicative of an amount of shopping transaction.

The following describes a customer information file 601 shown in FIG. 6.

The customer information file 601 is composed of a customer number 611 indicative of a code identifying a customer, a customer name 612, a customer address 613, a customer age 614, and a customer district 615 indicative of a regional classification of customer address. The customer number 611, the customer name 612, the customer address 613, the customer age 614, and the district 615 can be obtained from the customer attributes owned by a corporation.

The following describes a merchandise information file 701 shown in FIG. 7.

The merchandise information file 701 is composed of a merchandise ID 711 for identifying a merchandise, a description 712 indicative of contents of merchandise, and merchandise price 713.

The history information file 501, the customer information file 601, and the merchandise information file 701 can use the detailed information generally owned by a corporation in the form of a database.

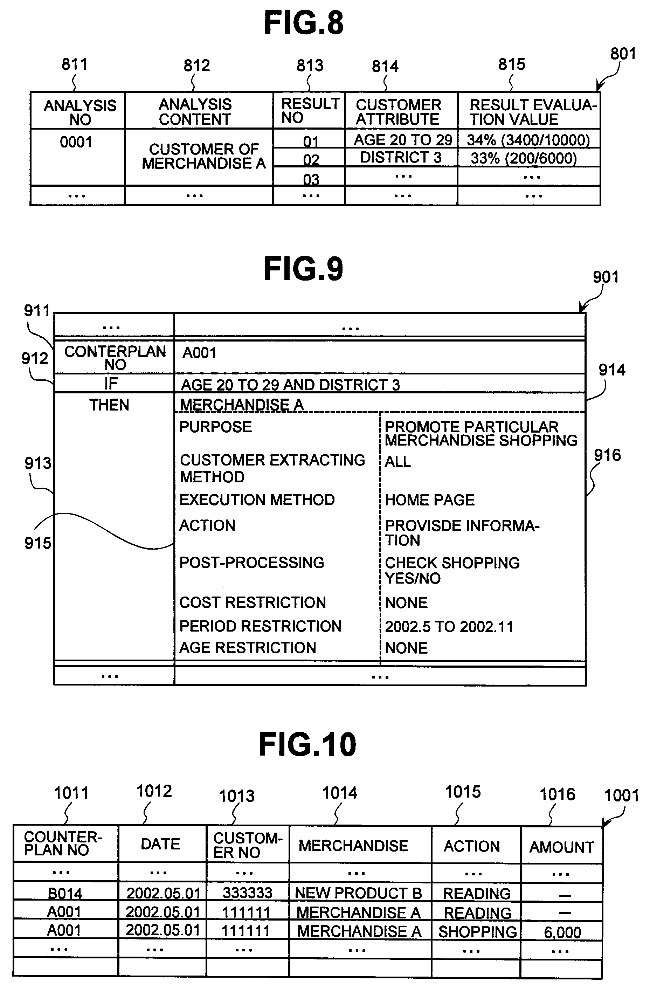

The following describes an analysis result information file 801 shown in FIG. 8.

The analysis result information file 801 is composed of an analysis number 811 for identifying an analysis result, an analysis condition part content 812, a result number 813 for identifying analysis result information, a customer attribute 814 corresponding to analysis result, and a result evaluation value 815.

The following describes a business rule information file 901 shown in FIG. 9.

The business rule information file 901 stores business rule information which includes a counterplan number 911 for identifying a business rule, "if" 912 indicative of the condition part of the business rule, and "then" 913 indicative of the conclusion part of the business rule. The conclusion part "then" 913 is composed of an area 914 indicative of a subject provided, a parameter item area 915 indicative of a parameter definition item, and a parameter definition area 916 indicative of parameter definition content.

The following describes a counterplan history information file 1001 shown in FIG. 10.

The counterplan history information file 1001 is composed of a counterplan number 1011 for identifying an executed counterplan, a date 1012 indicative of a date on which the counterplan was executed, a customer number 1013 for identifying a customer on whom the counterplan was executed, a merchandise 1014 indicative of a subject executed, an action 1015 indicative of a customer business action after execution of the rule, and an amount 1016 indicative of an amount of money caused by the customer business action.

The following describes a processing flow in the first preferred embodiment with reference to the schematic diagram of FIG. 1, the history information file example of FIG. 5, the customer information file example of FIG. 6, the merchandise information file example of FIG. 7, the counterplan information file example of FIG. 8, the business rule information file example of FIG. 9, and the counterplan history information file example of FIG. 10.

In the analysis processing, the computer 101 reads the history information file 501 from the history database 121 in the storage device 102, the customer information file 601 from the customer database 122, and the merchandise information file 701 from the merchandise database 123, analyzes the information necessary for a counterplan to generate the analysis result information file 801, and stores the generated analysis result information file into the analysis result database stored in the storage device 102.

Next, in the rule generation processing, the computer 101 adds rule parameter definition information of person in charge inputted from the input device 104 to the analysis result information file 801 held in the analysis result database 124 stored in the storage device 102 to generate the business rule file 901 and stores the generated file into the business rule base stored in the storage device 102.

In the rule execution processing, the computer 101 executes the rule in the business rule file 901 stored in the business rule base 125 respectively stored in the storage device 102 by use of the history information file 501 stored in the history database 121, the customer information file 601 in the customer database 122, and the merchandise information file 701 in the merchandise database 123 respectively stored in the storage device 102 to generate the counterplan history information 1001 and stores the generated counterplan history information into the counterplan history database in the storage device 102.

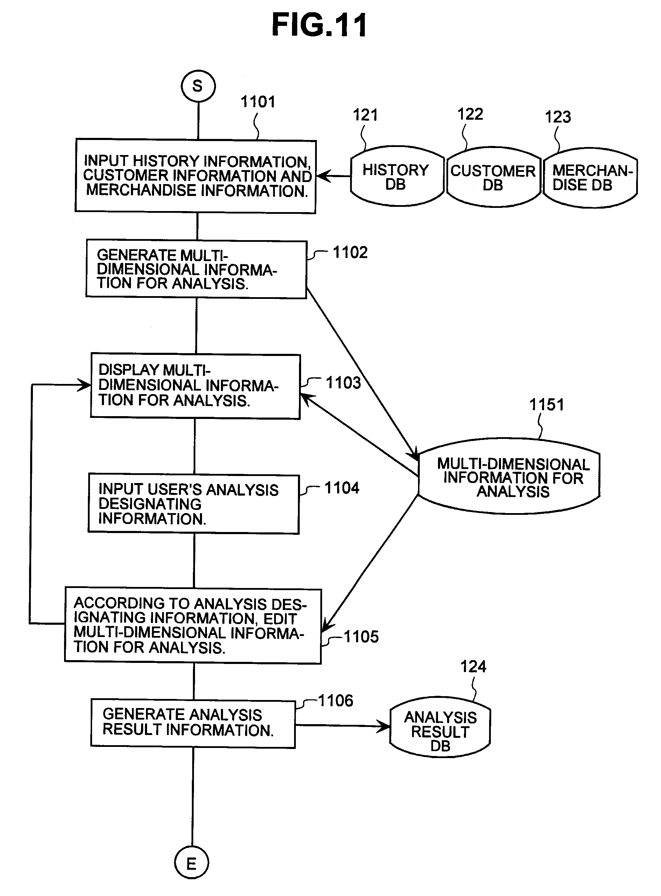

The following describes the analysis processing for implementing the analysis capability 111 of the computer 101 with reference to the analysis processing flow shown in FIG. 11.
[Step 1101] : Detailed information such as history information, customer information, and merchandise information stored in the databases owned by a corporation are inputted from the history database 121, the customer database 122, and the merchandise database 123 respectively stored in the storage device 102.
[Step 1102] : The history information, the customer information, and the merchandise information are integrated to generate multi-dimensional information for analysis and the generated multi-dimensional information for analysis is stored into a multi-dimensional database for analysis 1151.
[Step 1103] : The axis information of the multi-dimensional information for analysis is displayed on the output device 103.
[Step 1104] : The analysis designating information of person in charge is inputted from the input device 104.
[Step 1105] : According to the inputted analysis designating information, the multi-dimensional information for analysis is edited. The result of the editing is returned to and displayed in step 1103.
[Step 1106] : Analysis result information is generated from the edited multi-dimensional information for analysis to be stored in the analysis result database in the storage device 102.

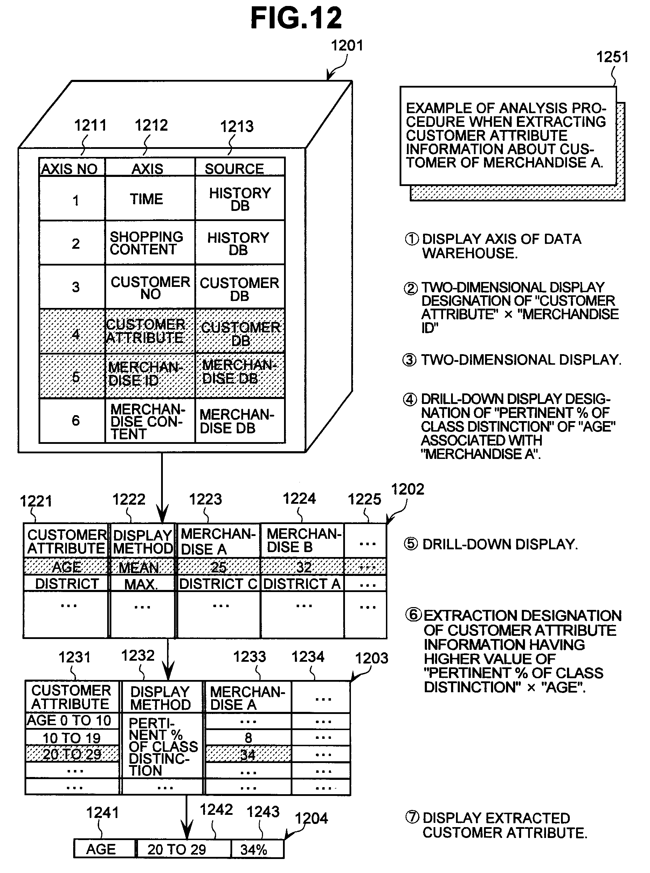

The following describes a file of multi-dimensional information for analysis 1201 shown in FIG. 12.

The file of multi-dimensional information for analysis 1201 is composed of an axis number 1211 for identifying a dimensional axis, an axis 1212 indicative of the name of a dimensional axis, and an acquisition database 1213 storing detailed data of each dimension. The axis 1212 is displayed and, if a customer attribute for example is selected as the axis, the customer attribute information is acquired from the customer database.

The following describes "Example of an analysis procedure for extracting the customer attribute of a person who bought merchandise A" 1251 by use of the file of multi-dimensional information for analysis 1201 with reference to FIG. 12.

### [Step 1 : Display the axis of data warehouse]

The axis 1212 of the file of multi-dimensional information for analysis 1201 is displayed on the output device 103 (corresponding to step 1103).

### [Step 2 : Two dimensional display designation of "customer attribute" × (multiplied by) "merchandise ID" (a combination of "customer attribute" and "merchandise ID")]

Two dimensional display designating information of "customer attribute" × (multiplied by) "merchandise ID" of person in charge is inputted from the input device 104 (corresponding to step 1104). According to this designation, the processing corresponding to step 1105 is executed.

### [Step 3 : Two-dimensional display]

The two-dimensional information 1202 of "customer attribute" × (multiplied by) "merchandise ID" composed of a customer attribute 1221 indicative of an item of customer attribute information, a display method 1222 indicative of the slice for displaying attribute item, and merchandise IDs 1223, 1224, and 1225 is displayed on the output device 103 (corresponding to step 1103). The information displayed in this step is the result of the processing corresponding to step 1105.

### [Step 4 : Drill-down display designation of "age" × (multiplied by) "pertinent % (percentage) of class distinction"]

"Age" × "pertinent % of class distinction" drill-down display designating information of person in charge is inputted from the input device 104 (corresponding to step 1104). According to this designation, the processing corresponding to step 1105 is executed.

### [Step 5 : Drill-down display]

"Age" × "pertinent % of class distinction" drill-down information 1203 composed of a customer attribute 1231 obtained by drilling down "age" by class distinction, a display method indicative of a slice for attribute item display, and merchandise IDs 1223, 1224, and 1225 of the customer attribute information items is displayed on the output device 103 (corresponding to step 1103). The information displayed in this step is the result of the processing corresponding to step 1105.

### [Step 6 : Extraction designation of high-value customer attribute information of the "pertinent % of class distinction" of "age" associated with "merchandise A"]

A designation for extracting high-value customer attribute information of "pertinent % of class distinction" of "age" associated with "merchandise A" of person in charge is inputted from the input device 104 (corresponding to step 1104). According to this instruction, the processing corresponding to step 1105 is executed.

### [Step 7 : Display extracted customer attribute]

Extracted customer attribute information 1204 composed of "age" 1241 indicative of an extracted customer attribute item, "20 to 29" 1242 indicative of the content of attribute item, and "34%" 1243 indicative of extraction evaluation value is displayed on the output device 103 (corresponding to step 1103).

While analyzing the file of multi-dimensional information for analysis 1201, the person in charge can extract "customers of ages 20 to 29 correspond at an evaluation value of 34%" in response to "a designation for extracting higher-value customer attribute of the pertinent percentage % of class distinction of the age of persons who bought merchandise A" as an analysis result.

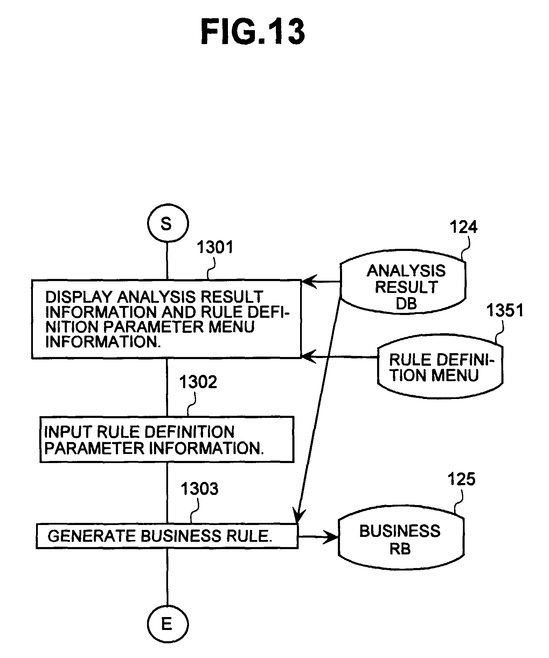

The following describes rule generation processing for implementing the rule generation capability 112 of the computer 101 shown in FIG. 13 with reference to the rule generation processing flow shown in FIG. 13.
[Step 1301] : The generated analysis result information and the rule definition menu information are inputted from the analysis result database 124 and a rule definition menu database 1351 in the storage device 102 respectively and displayed.
[Step 1302] : The person in charge inputs, from the input device, the rule definition parameter information composed of a designation for selecting analysis result information from the displayed analysis result information, a designation for selecting a rule definition from the displayed rule definition menu, and a rule definition not included in the rule definition menu.
[Step 1303] : Based on the inputted rule definition parameter information, a business rule is generated with reference to the analysis result database 124 and the rule definition menu database 1351 and the generated business rule is stored in the business rule base.

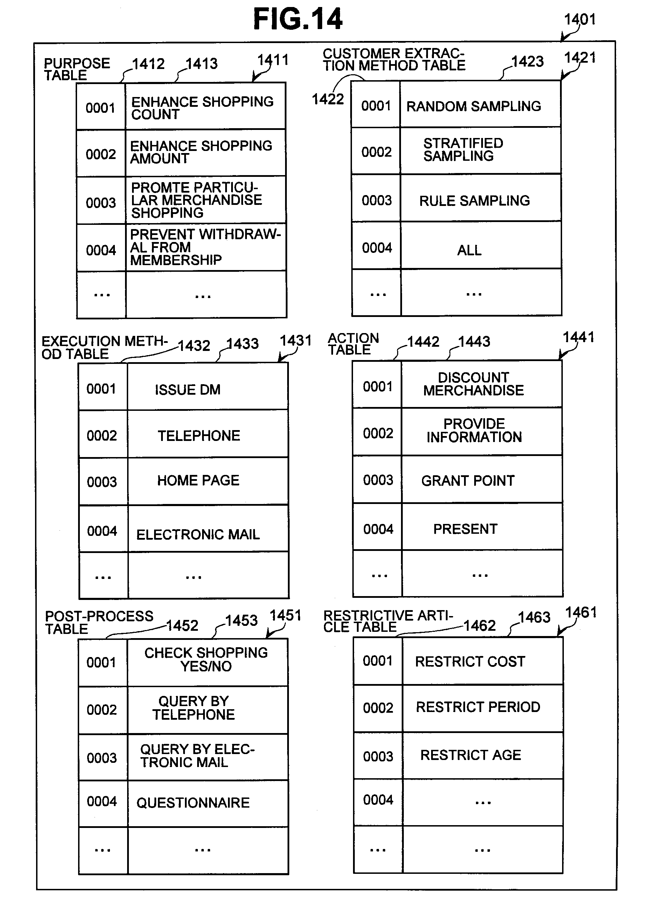

The following describes a rule definition menu file 1401 shown in FIG. 14.

The rule definition menu file 1401 is composed of a purpose table 1411, a customer extracting method table 1412, an execution method table 1431, an action table 1441, a post-process table 1451, and a restrictive article table 1461.

The purpose table 1411 indicates the purpose of a counterplan and is composed of an area 1412 indicative of a purpose identification code and an area 1413 indicative of purpose content.

The customer extracting method table 1421 indicates a method of extracting customers as subjects of the counterplan and is composed of an area 1422 indicative of a customer extracting method identification code and an area 1423 indicative of customer extracting method contents.

As when executing a counterplan in DM (Direct Mail), for example, if a counterplan cost is limited, it is necessary to further narrow down the number of persons by random extraction for example in addition to attribute conditions of customer as a subject. Also available are stratified sampling for restricting samples to a certain region and a restrictive sampling in which a current customer attribute condition is checked against a next customer attribute condition.

The execution method table 1431 indicates a method of executing a counterplan and is composed of an area 1432 indicative of an execution method identification code and an area 1433 indicative of an execution method content.

The action table 1441 indicates an action to be taken on customer and is composed of an area 1442 indicative of an action identification code and an area 1443 indicative of an action content.

The post-process table 1451 indicates a process to be taken after the counterplan and is composed of an area 1452 indicative of a post-process identification code and an area 1453 indicative of a post-process content.

The restrictive article table 1461 indicates restrictions on the counterplan and is composed of an area 1462 indicative of a counterplan restriction identification code and an area 1463 indicative of a counterplan restriction content.

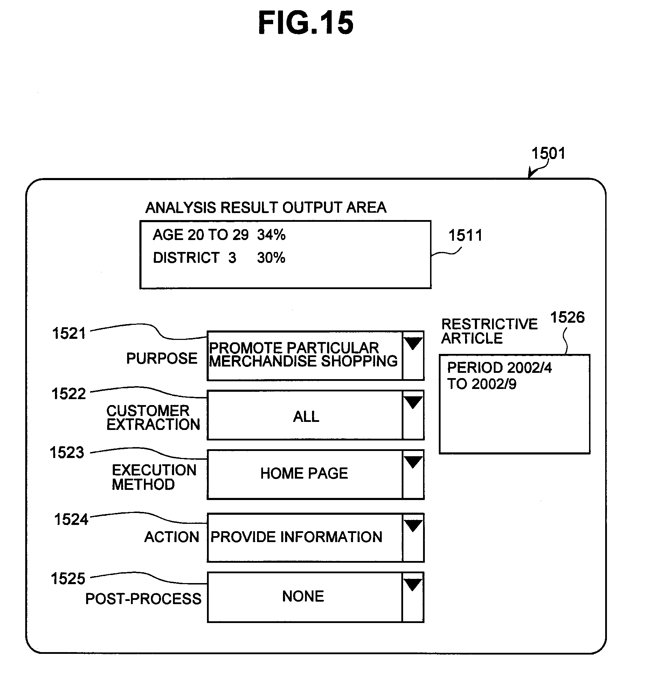

The following describes a rule definition screen 1501 shown in FIG. 15.

The rule definition screen 1501 is composed of an analysis result output area 1511, a purpose area 1521 for defining a rule parameter, a customer extracting method area 1522, an execution method area 1523, an action area 1524, a post-process area 1525, and a restrictive article area 1526.

The business rule is generated on the rule definition screen according to the processing flow shown in FIG. 13. The rule definition screen shown in FIG. 15 indicates one example of a business rule.

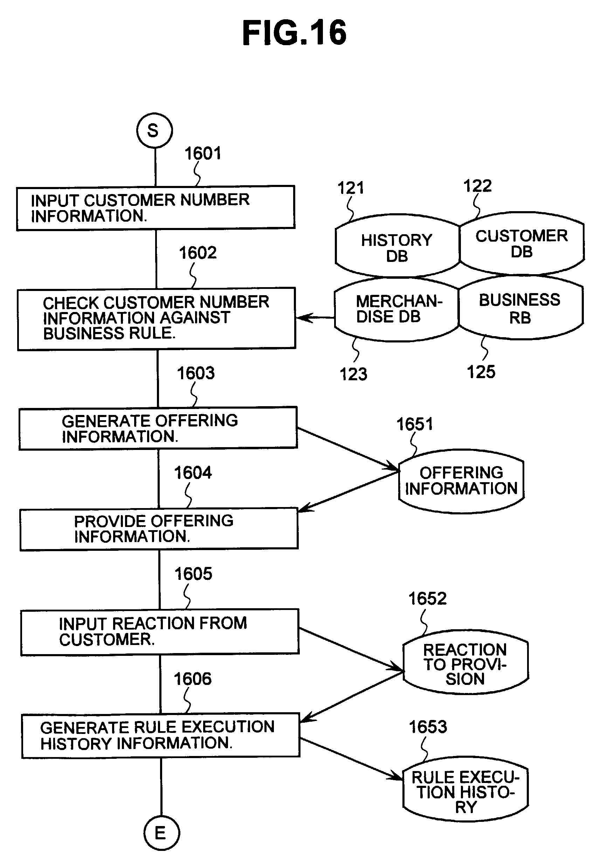

The following describes rule execution processing for implementing the rule execution capability 113 with reference to a rule execution processing flow shown in FIG. 16.
[Step 1601] : Customer number information is inputted from the input device 104.
[Step 1602] : By use of the history database, the customer database, an the merchandise database stored in the storage device 102, the customer number information inputted in step 1601 is checked against the business rule information stored in the business rule base 125.
[Step 1603] : The offering information is generated according to the business rule and the generated information is stored in the provided information database 1651.
[Step 1604] : The offering information is provided to customers through a home page for example.
[Step 1605] : Reaction by customer to the offering information, for example "reading" or "shopping" is inputted from the input device 104.
[Step 1606] : Rule execution history information (counterplan history information) is generated from the information about the reaction by customer to the offering information and the offering information and the generated rule execution history information is stored in a rule execution history (counterplan history) database 1653.

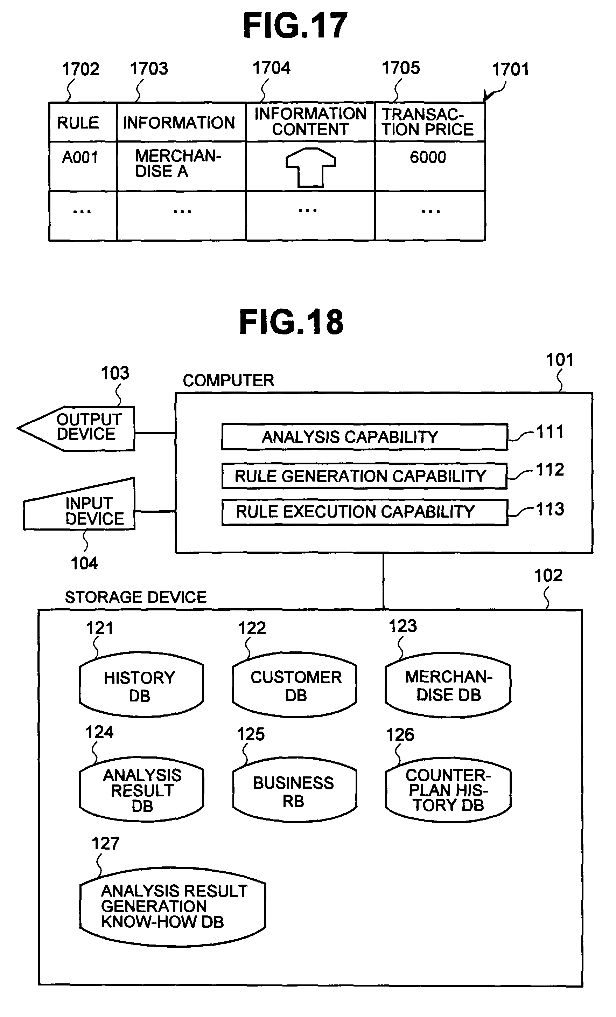

The following describes an offering information file 1701 shown in FIG. 17.

The offering information file 1701 is composed of a corresponding counterplan number 1702, information 1703 indicative of an identification code of the information to be provided, information content 1704 indicative of the content of the offering information, and a transaction price 1705 indicative of the amount at the establishment of a transaction.

Thus, according to the first preferred embodiment, the business rule can be generated by use of the analysis result data supplied from the analysis system, thereby providing customization linked to the analysis. In addition, the generated business rule can be proved by detailed values.

The following describes a second preferred embodiment of the invention that allows a person in charge who is not a counterplan specialist to generate analysis result simply by inputting analysis execution parameters by defining know-how for analysis result generation beforehand.

FIG. 18 illustrates a device configuration of a marketing system including its functional configuration for realizing the second preferred embodiment.

In device constitution, the second preferred embodiment comprises the device constitution of the first preferred embodiment and an analysis result generation know-how database 127 added to the storage device 102.

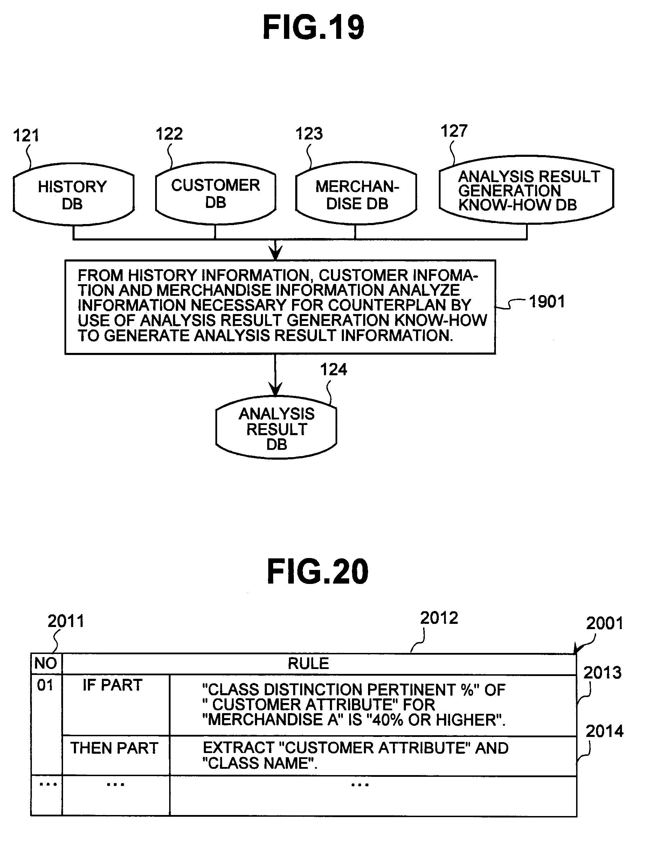

The following describes analysis processing for realizing a variation shown in FIG. 19 to the analysis capability 111.

Analysis processing 1901 reads the shopping history information held in the history database 121 stored in the storage device 102, the customer information in the customer database 122, and the merchandise information in the merchandise database 123. From these pieces of information, the analysis processing 1901 generates analysis result information by use of analysis result generation know-how information stored in the analysis result generation know-how database 127 and stores the generated analysis result information into the analysis result database 124 of the storage device 102.

The following describes an analysis result generation know-how file 2001 shown in FIG. 20.

The analysis result generation know-how file 2001 is composed of a number 2011 for identifying analysis result generation know-how, a rule 2012 indicative of an analysis result generation know-how area, an "if" part 2013 of the analysis result generation know-how, and a "then" part 2014 of the analysis result generation know-how.

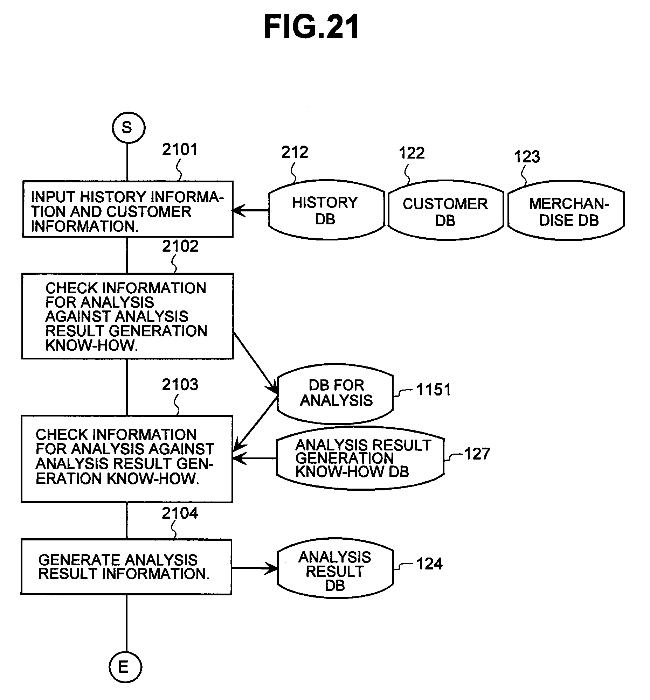

The following describes analysis processing for realizing a variation to the analysis capability with reference to an analysis processing flow shown in FIG. 21.
[Step 2101] : As described before, the history information, the customer information, and the merchandise information are inputted.
[Step 2102] : As described before, the multi-dimensional information for analysis is generated.
[Step 2103] : The analysis result know-how is read from the analysis result generation know-how database 127 of the storage device 102 and the analysis result know-how is checked against the multi-dimensional information for analysis.
[Step 2104] : As described before, the analysis result information is generated.

Thus, according to the second preferred embodiment, any offerer having no sixth sense or experience in any analysis result exceeding a predetermined threshold can generate analysis results simply by defining parameters necessary for execution.

The following describes a third preferred embodiment of the invention that allows a person in charge who is not a professional in business rule generation to generate a business rule, if an analysis result is available, by defining rule parameter information beforehand.

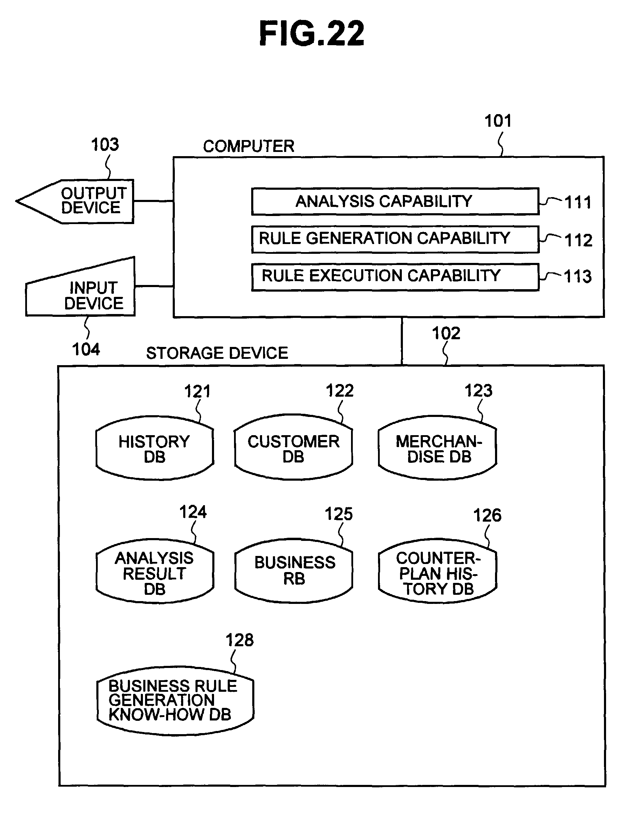

FIG. 22 illustrates a device constitution of a marketing system including its functional constitution for realizing the third preferred embodiment.

In device constitution, the third preferred embodiment comprises the device constitution of the first preferred embodiment and a rule parameter 128 added to the storage device 102.

The following describes rule generation processing for realizing a variation, shown in FIG. 22, of the rule generation capability.

The rule generation processing 2301 adds the business rule generation know-how information held in the business rule generation know-how database 128 of the storage device 102 to the analysis result information held in the analysis result database 124 of the storage device 102 to generate business rule information and stores the generated business rule information into the business rule base 125 of the storage device 102.

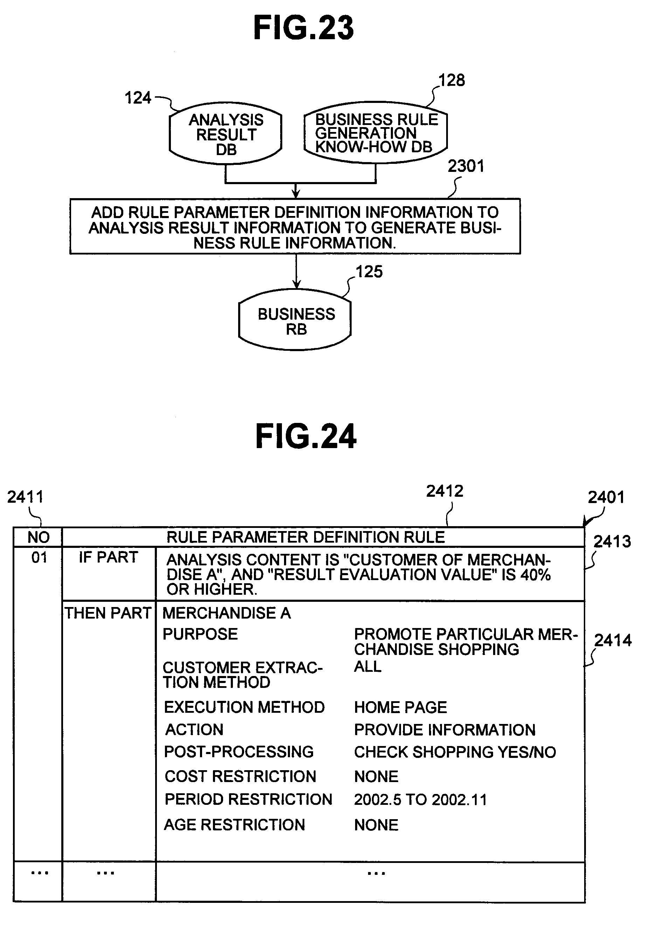

The following describes the rule generation processing for realizing a variation shown in FIG. 23 to the rule generation capability.

The rule generation processing 2301 reads the analysis result information held in the analysis result database 124 of the storage device 102 and generates a business rule from this analysis result by use of the business rule generation know-how information held in the business rule generation know-how database 128 and stores the generated business rule into the business rule base 125 of the storage device 102.

The following describes a business rule generation know-how 2401 shown in FIG. 24.

The business rule know-how file 2401 is composed of a number 2411 for identifying a business rule generation know-how, a rule 2412 indicative of a rule parameter area, an "if" part 2413 of a rule parameter, and a "then" part 2414 of the rule parameter.

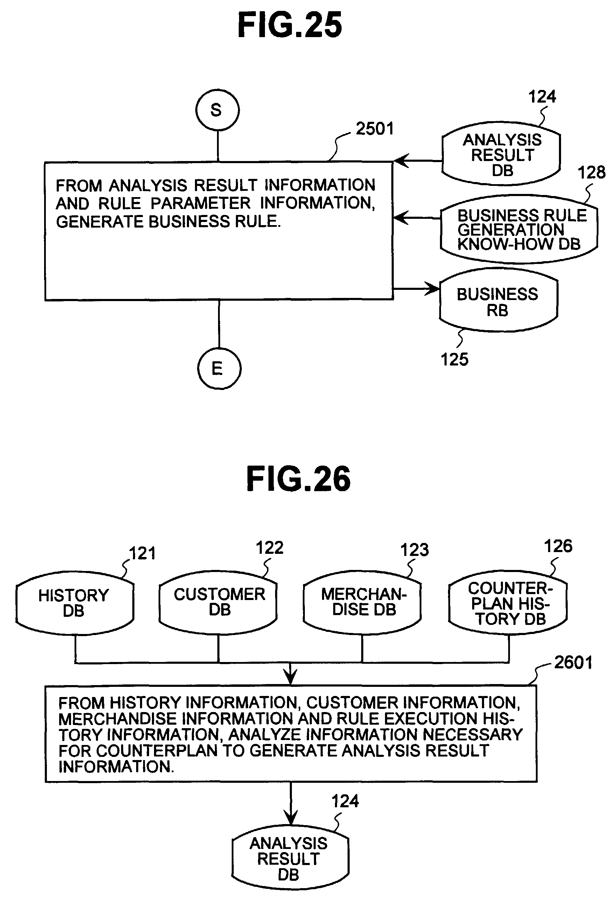

The following describes the rule generation processing for realizing a variation of the rule generation capability with reference to a rule generation processing flow shown in FIG. 25.

The analysis result information generated by the analysis capability 111 and the business rule generation know-how information are read from the analysis result database 124 of the storage device 102 and the business rule generation know-how database 128 respectively to generate a business rule. The generated business rule is stored in the business rule base 125 [step 2501].

Thus, according to the third preferred embodiment, any offerer having no sixth sense or experience in execution of a counterplan can generate a business rule by automatically adding parameters. In addition, the third preferred embodiment may be combined with the second preferred embodiment to automatically generate business rules, not manually.

The following describes a fourth preferred embodiment of the invention that allows the user to consider customer needs in the analysis processing for establishing an analysis result in order to let a business rule effectively work without involving a deviation from customer needs.

The system constitution of a marketing system for realizing the fourth preferred embodiment is generally the same as that shown in FIG. 1.

The following describes the analysis processing for realizing a variation, shown in FIG. 26, of the analysis capability.

Analysis processing 2601 reads the shopping history information held in the history database 121 of the storage device 102, the customer information held in the customer database 122, the merchandise information held in the merchandise database 123, and the counterplan history information held in the counterplan history database 126. From these pieces of information, the analysis processing 2601 extracts information necessary for the counterplan as designated by person in charge, checks the counterplan, generates analysis result information, and stores the generated analysis result information into the analysis result database 124 of the storage device 102.

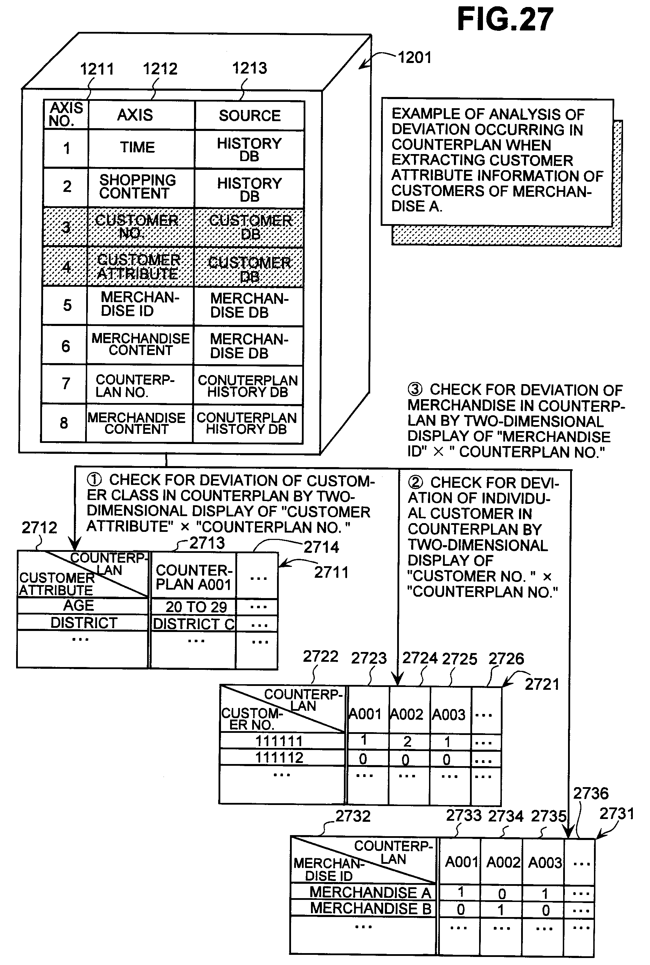

The following describes a variation 2701 shown in FIG. 27 to the file of multi-dimensional information for analysis.

Like the file for multi-dimensional information for analysis shown in FIG. 12, the variation 2701 of the file of multi-dimensional information for analysis is composed of an axis number 1211, an axis 1212, and an acquisition database 1213. The variation 2701 differs from the file of multi-dimensional information for analysis shown in FIG. 12 in the addition of "7", counterplan NO., and counterplan database, and "8", merchandise content, and counterplan history database respectively to the axis number, the axis, and the source.

The following describes "analysis example of deviation occurring in counterplan when extracting customer attribute information of customer of merchandise A" 2751 by use of the variation 2701 to the file of multi-dimensional information for analysis.

### [Example 1 : Checking for customer attribute deviation]

The axis 1212 of the variation 2701 to the file of multi-dimensional information for analysis is displayed on the output device 103. Two-dimensional display designating information of "customer attribute" × "counterplan number" of person in charge is inputted from the input device 104. "Customer attribute" × "counter number" file 2711 is generated and displayed.

The "customer attribute" × "counterplan number" file 2711 is composed of a customer attribute 2712 on the vertical axis for customer attribute identification and a counterplan numbers 2713 and 2714 on the horizontal axis for customer attribute identification.

This allows the user to check counterplans for such a deviation in customer attribute as the concentration of a plurality of counterplans in one particular attribute.

### [Example 2 : Checking for customer deviation]

The axis 1212 of the variation 2701 to the file of multi-dimensional information for analysis is displayed on the output device 103. The two-dimensional display designating information of "customer number" × "counterplan number" of person in charge is inputted from the input device 104. A "customer number" × "counterplan number" file 2721 is generated and displayed.

The "customer number" × "counterplan number" file 2721 is composed of a customer number 2722 on the vertical axis for customer identification and counterplan numbers 2723, 2724, 2725, and 2726 on the horizontal axis for counterplan identification.

This allows the user to check counterplans for such customer deviation as overlapping a plurality of counterplans on one customer and the existence of any customer to whom no counterplan applies.

### [Example 3 : Checking for merchandise deviation]

The axis 1212 of the variation 2701 to the file of multi-dimensional information for analysis is displayed on the output device 103. Two-dimensional display designating information of "merchandise ID" × "counterplan number" of person in charge is inputted from the input device 104. A "merchandise ID" × "counterplan number" file 2731 is generated and displayed.

The "merchandise ID" × "counterplan number" file 2731 is composed of a merchandise ID 2732 on the vertical axis for merchandise identification and counterplan numbers 2733, 2734, 2735, and 2736 on the horizontal axis for counterplan identification.

This allows the user to check counterplans for such merchandise deviations as overlapping of a plurality of counterplans on one particular merchandise and the existence of any merchandise to which no counterplan applies.

Thus, according to the fourth preferred embodiment, the entire business rules can be reviewed from customer's viewpoint by capturing counterplan results into the analysis system.

In addition, the entire business rules can be evaluated whether there is any customer attribute deviation. Further, the entire business rules can be evaluated whether there is any customer deviation. Still further, the entire business rules can be evaluated whether there is any merchandise deviation.

The program for executing the above-mentioned marketing method according to the invention can also be stored in a computer-readable storage medium and loaded into the main storage device of the computer for execution.

As described and according to the invention, a business rule is generated by use of the analysis result data supplied from the analysis system. Consequently, customization linked to the analysis can be provided and the generated business rule can be proved with detailed values.

The present invention further allows any offerer having no sixth sense or experience in analysis result to generate an analysis result simply by defining parameters necessary for execution.

The present invention allows any offerer having no sixth sense or experience in counterplan execution to generate a business rule by automatically adding parameters. In addition, combination with a simple analysis result generating method allows the user to automatically generate business rules, not manually.

The present invention allows the user to review the entire business rules from customer viewpoint by capturing counterplan results into the analysis system and to check the entire business rules for customer attribute deviation, customer deviation, and merchandise deviation.

While the preferred embodiments of the present invention have been described using specific terms, such description is for illustrative purposes only, and it is to be understood that changes and variations may be made without departing from the spirit or scope of the appended claims.

## Claims

1. A marketing system for providing merchandise and information suitable for each customer comprising:
an input device;
a processor; and
a storage device storing a history database, a customer database, a merchandise database, an analysis result database, and a business database;
wherein said processor includes
an analysis processing means for analyzing history information in said history database, customer information in said customer database, and merchandise information in said merchandise database based on analysis designating information inputted from said input device and storing analysis result information into said analysis result database and
a rule generation processing means for selecting analysis result information from said analysis result database based on selection designating information inputted from said input device, generating a business rule from the selected analysis result information and rule definition parameter information inputted from said input device, and storing the generated business rule into said business database.

2. A marketing system for providing merchandise and information suitable for each customer comprising:
an input device;
a processor; and
a storage device storing a history database, a customer database, a merchandise database, an analysis result database, a business database, a counterplan database, said analysis result database storing results obtained by analyzing contents of said history database, said customer database and said merchandise database, said business database storing a business rule generated based on said analysis result database;
wherein said processor includes a rule execution processing means for generating offering information by checking a customer number inputted from said input device against said business rule stored in said business database, executing a counterplan based on the checked business rule, generating counterplan history information based on information about reaction by a customer to the executed counterplan by providing said offering information and said offering information, and storing said counterplan history information into said counterplan history database.

3. A marketing system for providing merchandise and information suitable for each customer comprising:
an input device;
a processor; and
a storage device storing a history database, a customer database, a merchandise database, an analysis result database, a business database, and an analysis result generation know-how database;
wherein said processor includes an analysis processing means for selecting analysis result generation know-how from said analysis result generation know-how database according to an analysis result generation know-how selecting designation inputted from said input device, analyzing history information in said history database, customer information in said customer database, and merchandise information in said merchandise database based on the selected analysis result generation know-how, and storing obtained analysis result information into said analysis result database.

4. A marketing system for providing merchandise and information suitable for each customer comprising:
an input device;
a processor; and
a storage device storing a history database, a customer database, a merchandise database, an analysis result database, a business database, and a business rule generation know-how database, said analysis result database storing results of analyzing contents of said history database, said customer database, and said merchandise database, said business database storing a business rule generated based on said analysis result database;
wherein said processor includes a rule generation processing means for selecting analysis result information from said analysis result database based on selection designating information inputted from said input device, selecting business rule generation know-how from said business rule generation know-how database based on a business rule generation know-how selecting designation inputted from said input device, generating a business rule based on the selected analysis result information and the selected business rule generation know-how, and storing the generated business rule into said business database.

5. A marketing system for providing merchandise and information suitable for each customer comprising:
an input device;
an output device;
a processor; and
a storage device storing a history database, a customer database, a merchandise database, an analysis result database, a business database, and a counterplan history database;
wherein said processor includes a processing means that, when two-dimensional display designating information formed by a combination of a customer attribute and a counterplan number is inputted from said input device, references information stored in said history database, said customer database, said merchandise database, and said counterplan history database, generates two-dimensional display information arranged with a customer attribute corresponding to each counterplan number with one of a vertical axis and a horizontal axis representing said customer attribute item and the other of said vertical axis and said horizontal axis representing said counterplan number, and displays the generated two-dimensional display information onto said output device.

6. A marketing system for providing merchandise and information suitable for each customer comprising:
an input device;
an output device;
a processor; and
a storage device storing a history database, a customer database, a merchandise database, an analysis result database, a business database, and a counterplan history database;
wherein said processor includes a processing means that, when two-dimensional display designating information formed by a combination of a customer number and a counterplan number is inputted from said input device, references information stored in said history database, said customer database, said merchandise database, and said counterplan history database, generates two-dimensional display information arranged with the number of customers corresponding to each counterplan number with one of a vertical axis and a horizontal axis representing said customer number and the other of said vertical axis and said horizontal axis representing said counterplan number, and displays the generated two-dimensional display information onto said output device.

7. A marketing system for providing merchandise and information suitable for each customer comprising:
an input device;
an output device;
a processor; and
a storage device storing a history database, a customer database, a merchandise database, an analysis result database, a business database, and a counterplan history database;
wherein said processor includes a processing means that, when two-dimensional display designating information formed by a combination of a merchandise ID and a counterplan number is inputted from said input device, references information stored in said history database, said customer database, said merchandise database, and said counterplan history database, generates two-dimensional display information arranged with the number of merchandises corresponding to each counterplan number with one of a vertical axis and a horizontal axis representing said merchandise identification and the other of said vertical axis and said horizontal axis representing said counterplan number, and displays the generated two-dimensional display information onto said output device.

8. A marketing method of providing merchandise and information suitable for each customer by use of a processor, comprising the steps of:
storing a history database, a customer database, a merchandise database, an analysis result database, and a business database into a storage device;
analyzing history information in said history database, customer information in said customer database, and merchandise information in said merchandise database based on analysis designating information inputted from an input device and storing analysis result information into said analysis result database;
selecting said analysis result information from said analysis result database based on selection designating information inputted from said input device;
generating a business rule based on said selected analysis result information and rule definition parameter information inputted from said input device; and
storing the generated business rule into said business database.

9. A computer-readable recording medium storing a program for executing a marketing method of providing merchandise and information suitable for each customer by use of a processor, said marketing method comprising the steps of:
storing a history database, a customer database, a merchandise database, an analysis result database, and a business database into a storage device;
analyzing history information in said history database, customer information in said customer database, and merchandise information in said merchandise database based on analysis designating information inputted from an input device and storing analysis result information into said analysis result database;
selecting said analysis result information from said analysis result database based on selection designating information inputted from said input device;
generating a business rule based on said selected analysis result information and rule definition parameter information inputted from said input device; and
storing the generated business rule into said business database.

10. A marketing method of providing merchandise and information suitable for each customer by use of a processor, comprising the steps of:
storing a history database, a customer database, a merchandise database, an analysis result database, a business database, and a counterplan history database into a storage device, said analysis result database storing a result of analyzing contents of said history database, said customer database, and said merchandise database, said business database storing a business rule generated based on analysis result database;
generating offering information by checking a customer number inputted from said input device and said business rule stored in said business database;
executing a counterplan based on the checked business rule;
generating counterplan history information based on information about reaction by a customer to the executed counterplan by providing said offering information and said offering information; and
storing said counterplan history information into said counterplan history database.

11. A marketing method of providing merchandise and information suitable for each customer by use of a processor, comprising the steps of:
storing a history database, a customer database, a merchandise database, an analysis result database, a business database, and an analysis result generation know-how database;
selecting analysis result generation know-how from said analysis result generation know-how database according to an analysis result generation know-how selecting designation inputted from said input device;
analyzing history information in said history database, customer information in said customer database, and merchandise information in said merchandise database based on the selected analysis result generation know-how; and
storing analysis result information into said analysis result database.

12. A marketing method of providing merchandise and information suitable for each customer by use of a processor, comprising the steps of:
storing a history database, a customer database, a merchandise database, an analysis result database, a business database, and a business rule generation know-how database into a storage device, said analysis result database storing a result of analyzing contents of said history database, said customer database, and said merchandise database, said business database storing a business rule generated based on said analysis result database;
selecting analysis result information from said analysis result database according to selection designating information inputted from said input device;
selecting business rule generation know-how from said business rule generation know-how database according to business rule generation know-how selecting designation inputted from said input device;
generating a business rule based on the selected analysis result information and the selected business rule generation know-how; and
storing the generated business rule into said business database.

13. A marketing method of providing merchandise and information suitable for each customer by use of a processor, comprising the steps of:
storing a history database, a customer database, a merchandise database, a business database, and a counterplan history database;
referencing, when two-dimensional display designating information formed by a combination of a customer attribute and a counterplan number is inputted from an input device, information in said history database, said customer database, said merchandise database, and said counterplan history database to generate two-dimensional display information arranged with said customer attribute corresponding to said counterplan number with one of a vertical axis and a horizontal axis representing a customer attribute item and other of said vertical axis and said horizontal axis representing said counterplan number; and
displaying the generated two-dimensional display information onto said output device.
